Europäisches Patentamt

European Patent Office

Office européen des brevets

(11) Veröffentlichungsnummer: **0 254 083**

**A2**

(12) # EUROPÄISCHE PATENTANMELDUNG

(21) Anmeldenummer: 87109372.0

(22) Anmeldetag: 30.06.87

(51) Int. Cl.⁴: **H02G 3/06**

(30) Priorität: 24.07.86 DE 3624992

(43) Veröffentlichungstag der Anmeldung:
**27.01.88 Patentblatt 88/04**

(84) Benannte Vertragsstaaten:
**AT BE CH DE FR GB IT LI NL**

(71) Anmelder: **Brökelmann, Jaeger & Busse GmbH & Co**
**Werler Strasse 1**
**D-5760 Arnsberg 1(DE)**

(72) Erfinder: **Henrici, Dieter, Dipl.-Ing.**
**Gabelsbergerstrasse 9**
**D-5760 Arnsberg 1(DE)**
Erfinder: **Wedding, Hans**
**Marderweg 4**
**D-5760 Arnsberg 1(DE)**

(74) Vertreter: **Sonnet, Bernd et al**
**Stresemannstrasse 6-8 Postfach 20 13 27**
**D-5600 Wuppertal 2(DE)**

(54) **Zugentlastungsvorrichtung für elektrische Leiter.**

(57) Eine Zugentlastungsvorrichtung (10) für elektrische Leiter (13) mit dem Querschnitt von einem Kreis abweichendem Umriß, insbesondere für Ovalleiter, wobei die Zugentlastungsvorrichtung (10) von zwei, Rückhaltekräfte auf den Leiter (13) ausübenden, miteinander verbindbaren Bauteilen (11, 12) gebildet ist, ist auf einfache Weise so gestaltet, daß sie mit einem einfachen Handgriff und ohne Werkzeuge ggf. reversibel in Entlastungsstellung bringbar ist. Erreicht wird dies dadurch, daß die beiden Bauteile (11, 12) jeweils eine dem Umriß des Leiters (13) angepaßte Leiterdurchführungsöffnung (14, 15) aufweisen, bei in Achsrichtung des Leiters im wesentlichen deckungsgleich angeordneten Leiterdurchführungsöffnungen (14, 15) miteinander steckverbindbar sowie durch Verdrehen gegeneinander um die Leiterlängsachse (L) in Leiterklemmstellung überführbar sind, in der also die Leiterdurchführungsöffnungen (14, 15) in Umfangsrichtung gegeneinander verdreht sind.

FIG. 4

## Zugentlastungsvorrichtung für elektrische Leiter

Die Erfindung betrifft eine Zugentlastungsvorrichtung für elektrische Leiter mit im Querschnitt von einem Kreis abweichendem Umriß, insbesondere für Ovalleiter, wobei die Zugentlastungsvorrichtung von zwei, Rückhaltekräfte auf den Leiter ausübenden, miteinander verbindbaren Bauteilen gebildet ist.

Zugentlastungsvorrichtungen für elektrische Leiter, insbesondere Anschlußkabel, sind in zahlreichen Ausführungen bekannt. Sie bestehen zumeist aus klemmenartig miteinander gegen den Leitermantel zu verspannenden Bauteilen, die den Leiter im wesentlichen S-bzw. Z-oder gar mäanderförmig umlenken. Da übliche Leiter relativ steif sind, können sie diesen Umlenkungen nur schwer folgen, woraus der Nachteil resultiert, daß die Anbringung der Zugentlastungsvorrichtungsteile häufig einige Mühe bereitet.

Der Erfindung liegt folglich die Aufgabe zugrunde, eine Zugentlastungsvorrichtung der im Oberbegriff des Anspruches 1 näher umrissenen Art verfügbar zu machen, der bei einfacher Gestaltung seiner Bauteile geweissermaßen mit einem Handgriff und ohne Werkzeuge ggf. reversibel, in Entlastungsstellung bringbar ist.

Die Erfindung löst diese Aufgabe dadurch, daß die beiden Bauteile jeweils eine dem Umriß des Leiters angepaßte Leiterdurchführungsöffnung aufweisen, bei in Achsrichtung des Leiters im wesentlichen deckungsgleich angeordneten Leiterdurchführungsöffnungen miteinander steckverbindbar sowie durch Verdrehen gegeneinander um die Leiterlängsachse in Leiterklemmstellung überführbar sind, in der also die Leiterdurchführungsöffnungen in Umfangsrichtung gegeneinander verdreht sind.

Die Erfindung benutzt zwei miteinander steck- und drehverankerbare Teile, von denen eines nach Art eines Drehknebels gehandhabt wird. Der Leiter wird dabei nicht, wie bei den meisten Zugentlastungsvorrichtungen üblich, quer zu seiner Längsrichtung wellenlinig verformt, sondern er erfährt eine Verdrillung um seine Längsachse. Diese Verdrillung im Übergangsbereich von einem zum anderen Bauteil reicht aus, um wirksame Rückhaltekräfte gegenüber am Leiter angreifenden Zugkräften aufzubringen. Die Betätigung der Zugentlastungsvorrichtung ist denkbar einfach. Während das eine Teil von Hand oder durch Befestigung am Gerät undrehbar gehalten wird, steckt man das andere in dieses erste Teil hinein, dreht es um vorzugsweise 90° herum, und schon ist der Leiter sicher gefaßt. Gegen Rückdrehung können die Bauteile z.B. durch Leiterklemmschluß gehalten sein.

Nach einer vorteilhaften Ausgestaltung ist vorgesehen, daß die beiden Bauteile in der Klemmstellung durch ggf. wiederlösbare Verrastung gegen Rückdrehung gesichert sind.

Vorteilhaft ist es, wenn die beiden Bauteile mit insbesondere bajonettverschlußartigen Drehkupplungsmitteln versehen sind. Ist dies der Fall, können die beiden Bauteile in der Tat mit nur einem einzigen Handgriff zusammengefügt und in die Klemmlage überführt werden.

Das eine Bauteil ist vorteilhaft als fest mit dem für den Leiteranschluß bestimmten Gerät verbindbares oder fest verbundenes Sockelteil und das andere als vom Leiter zu durchdringendes Drehriegelteil ausgebildet.

Weitere vorteilhafte Merkmale und weitere Ausgestaltungen ergeben sich aus den übrigen Unteransprüchen und aus der nachfolgenden Beschreibung der Erfindung anhand eines in den Zeichnungen dargestellten Ausführungsbeispiels. In den Zeichnungen zeigen:

Fig. 1 eine Ansicht der Zugentlastungsvorrichtung mit ihren beiden, noch nicht gekuppelten Bauteilen mit beide Bauteile durchgreifendem Leiter,

Fig. 2 eine Unteransicht unter das eine Bauteil entsprechend Ansichtspfeil II in Fig. 1, ohne Leiter,

Fig. 3 eine entsprechende Aufsicht auf das andere Bauteil gemäß Ansichtpfeil III der Fig. 1, ohne Leiter,

Fig. 4 eine zur einen Hälfte in der Ansicht, zur anderen Hälfte im Schnitt wiedergegebene Darstellung der Zugentlastungsvorrichtung in noch nicht verriegelter Stellung und

Fig. 5 einen Längsschnitt durch die in Leiterklemmstellung befindliche Zugentlastungsvorrichtung.

Die in ihrer Gesamtheit mit 10 bezeichnete Zugentlastungsvorrichtung besteht aus zwei Bauteilen 11 und 12, die vorzugsweise als Kunststoff-Spritzgießteile ausgeführt sind. Für das weitere Verständnis der Erfindung soll es sich bei dem Bauteil 11 um dasjenige handeln, welches dem Gerät zugeordnet, insbesondere an dem Gerät fest angeschlossen ist, an welches auch der Leiter 13 elektrisch angeschlossen wird, während das Bauteil 12 steckkuppelbar mit dem Bauteil 11 zusammenwirken soll und als Betätigungselement für die Zugentlastung dient.

Jedes der beiden Bauteil 11 und 12 weist eine jeweils an beiden Enden offene Leiterdurchführungsöffnung 14 bzw. 15 auf. Entsprechend dem als Ovalleiter ausgebildeten Leiter 13 sind auch die Leiterdurchführungsöffnungen bzw.

-kanäle 14 und 15 oval und in ihrer Querschnittsdimensionierung so ausgebildet, daß der Ovalleiter gerade eben gewaltlos hindurchgeführt werden kann, also gut in die Leiterdurchführungsöffnungen hinein und durch sie hindurch paßt.

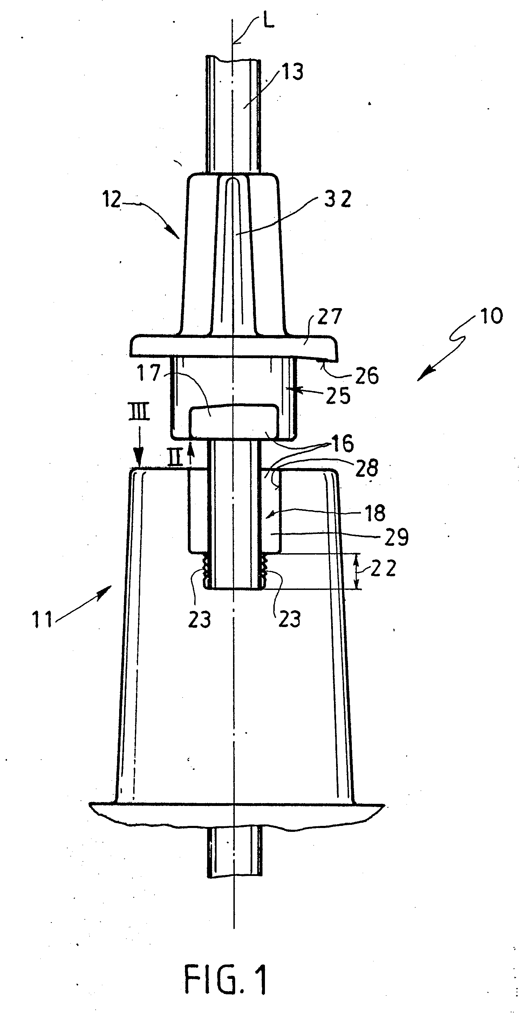

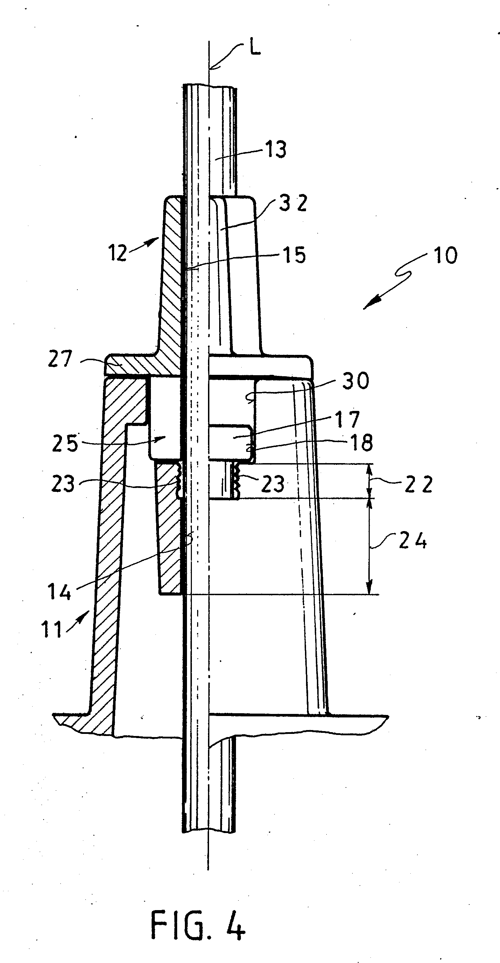

In der Zuordnung der Bauteile 11 und 12 zueinander, in der sie miteinander steckverbunden werden können (Fig. 1) befinden sich die beiden ovalen Leiterdurchführungsöffnungen 14, 15 in Deckung miteinander - vgl. insbes. Fig. 4. Der Leiter 13 kann also gleichzeitig durch beide Bauteile 11, 12 hindurchgesteckt werden, sofern dies nicht bereits zuvor geschehen ist.

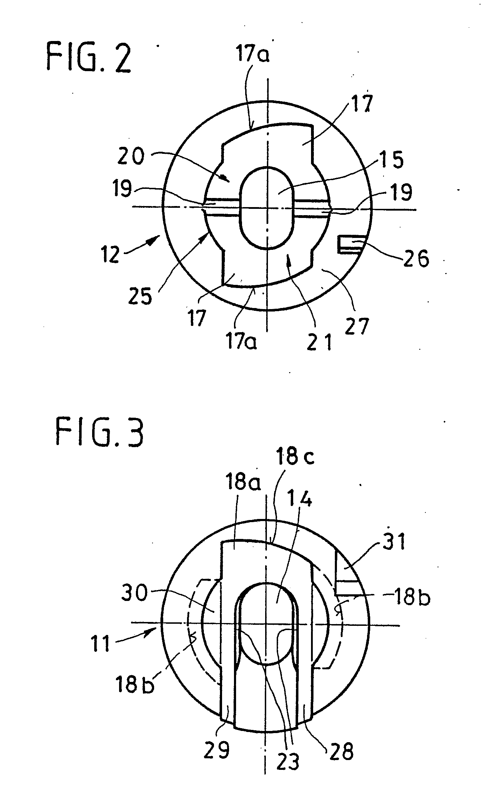

Die Bauteile 11 und 12 besitzen bajonettverschlußartige Drehkupplungsmittel 16, und zwar das Bauteil 12 zwei einander gegenüberliegende Bajonettverschlußzapfen 17 und das Bauteil 11 eine aus den Umfangsabschnitten 18a und 18b gebildete Verschlußkulisse 18. Wie aus Fig. 3 ersichtlich, sind die Verschlußkulissen-Abschnitte 18b kreisförmig, während der mittlere Abschnitt 18a eine etwa spiralförmig ansteigende Außenfläche 18c aufweist. Eine entsprechend ausgebildete Schräge 17a ist an den beiden Verschlußzapfen 17 des Bauteiles 12 vorgesehen, die im übrigen durch Einschnitte 19 in zwei gegeneinander federbare Klemmbacken 20 und 21 unterteilt ·sind, deren Funktion später erläutert wird.

In einem Abschnitt direkt unterhalb der Verschlußkulisse 18 ist ein umfänglich etwas erweiterter Axialbereich 22 am oberen Endabschnitt der Leiterdurchführungsöffnung 15 vorgesehen, dessen einander gegenüberliegende Innenseiten mit Klemmriefen 23 versehen ist.

Ausgehend von einer noch nicht gekuppelten Stellung der Bauteile 11 und 12 mit durch beide Bauteile hindurchgehendem Leiter 13 (Fig. 1) erfolgt die Überführung der Zugentlastungsvorrichtung 10 in die Zugentlastungsstellung sehr einfach wie folgt: Das drehknebelartige Bauteil 12 wird in Längsrichtung des Leiters 13 zum anderen Bauteil hin geschoben, bis die Verschlußzapfen 17 des Bauteils 12 in die Verschlußkulisse 18 eintauchen. Wie gesagt, befinden sich hier die Konturen der beider Leiterdurchführungsöffnungen 14 und 15 in kongruenter Deckung. Wird nun bei festgehaltenem Bauteil 11 das drehknebelartige Bauteil 12 um etwa 90° um die gemeinsame Längsachse L aller Teile herum gedreht, nimmt die Leiterdurchführungsöffnung 14 den in ihr steckenden Leiterabschnitt in Drehrichtung entsprechend mit: Der Leiter wird im Übergangsbereich von dem einen Bauteil 11 zum anderen Bauteil 12 in sich verwunden. Da er vom Bauteil 11 nur im Axialbereich 24 der Leiterdurchführungsöffnung 14 festgehalten wird, führt diese Verwindung dazu, daß der Leitermantel in dem Axialabschnitt 22 darüber mit den Klemmriefen 23 in zusätzliche rückhaltende Umfangsberührung gelangt.

· Eine weitere Erhöhung der Rückhaltekräfte wird durch die eingangs erläuterte Unterteilung des Verschlußzapfenabschnitts 25 in die beiden Klemmbacken 20 und 21 erreicht. Wird nämlich das drehknebelartige Bauteil 12 mit seinen Verschlußzapfen 17 in der Verschlußkulisse 18 des Bauteils 11 relativ zu diesem verdreht, erfahren die beiden Klemmbacken 20, 21 infolge der ansteigenden Außenflächen 17a der Verschlußzapfen 17 entlang den kreisbogenförmigen Abschnitten 18b der Verschlußkulisse 18 eine radial nach innen gerichtete Kraft, die die beiden Klemmbacken 20 und 21 zueinander und somit gegen den Leitermantel preßt.

Auf diese Weise ist der Leiter hochwirksam gegen Zugkräfte von den beiden Bauteilen 11 und 12 der Zugentlastungsvorrichtung 10 gehalten.

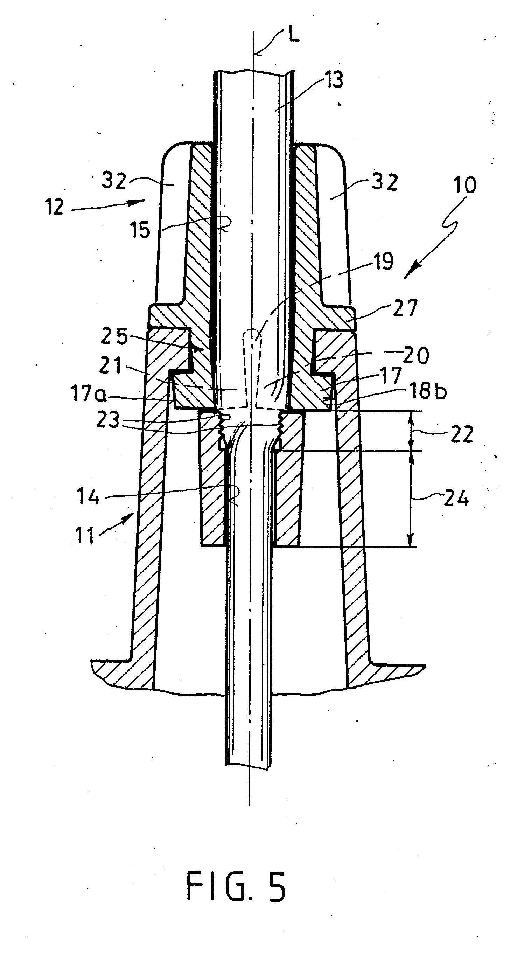

Man kann die in Fig. 5 gezeigte Klemm-bzw. Zugentlastungsstellung der beiden Bauteile 11 und 12 zueinander durch reinen Klemmschluß sichern. Um aber diese Sicherung noch zu verbessern, ist beim Ausführungsbeispiel eine formschlüssige Rastverbindung vorgesehen. Diese umfaßt einen kleinen Rastnocken 26 unterhalb eines kragenförmigen Abschnittes 27 am Bauteil 12 sowie eine Gegenrast 28 am Bauteil 11. Die Gegenrast 28 ist hier in sehr einfacher Ausbildung und Anordnung eine Kante einer nach außen offenen, zur spritzgießtechnischen Formgebung sinnvollen Quernut 29 (vgl. auch Ansicht nach Fig 1). Die Rastverbindung kann auf einfache Weise reversibel, d.h. wiederlösbar gestaltet werden, insbesondere dann, wenn die verwendeten Kunststoffe zumindest begrenzt elastisch eingestellt sind. Mit 31 ist eine 'Bereitschaftsmulde' auf der oberen Stirnseite des Bauteils 11 bezeichnet, in der der Rastnocken anfangs beim Zusammenstecken der Bauteile 11, 12 Platz findet, so daß die Bauteile 11, 12 einander ganz dicht angenähert werden können. Sobald die Verschlußzapfen 17 gegriffen haben, wird der Rastnocken 26 aus der Mulde 31 heraus und unter dem Einfluß der elastischen Ausbildung oder Einstellung des Kragens 27 über die Stirnfläche des Bauteils 11 gedreht, bis der Nocken 26 hinter die Rastkante 28 einschnappt.

Zur vereinfachten Handhabung weist das drehknebelartige Bauteil 12 zwei einander gegenüberliegende flügelartige Drehbetätigungsrippen 32 auf.

Aus der vorstehenden Beschreibung der Erfindung ist ersichtlich, daß die Betätigung der Zugentlastungsvorrichtung 10 sehr einfach ist und sich die Vorrichtung zur wirksamen Zugentlastung für alle Leiter eignet, deren Mantelquerschnitt von einem Kreis abweicht.

**Ansprüche**

1. Zugentlastungsvorrichtung für elektrische Leiter mit im Querschnitt von einem Kreis abweichendem Umriß, insbesondere für Ovalleiter, wobei die Zugentlastungsvorrichtung von zwei, Rückhaltekräfte auf den Leiter ausübenden, miteinander verbindbaren Bauteilen gebildet ist, dadurch gekennzeichnet , daß die beiden Bauteile (11, 12) jeweils eine dem Umriß des Leiters (13) angepaßte Leiterdurchführungsöffnung (14, 15) aufweisen, bei in Achsrichtung des Leiters im wesentlichen deckungsgleich angeordneten Leiterdurchführungsöffnungen (14, 15) miteinander steckverbindbar sowie durch Verdrehen gegeneinander um die Leiterlängsachse (L) in Leiterklemmstellung überführbar sind, in der also die Leiterdurchführungsöffnungen (14, 15) in Umfangsrichtung gegeneinander verdreht sind.

2. Zugentlastungsvorrichtung nach Anspruch 1, dadurch gekennzeichnet, daß die beiden Bauteile (11, 12) in Leiterklemmstellung durch ggf. wiederlösbare Verrastung (26, 28) gegen Rückdrehung gesichert sind.

3. Zugentlastungsvorrichtung nach Anspruch 1 oder 2, dadurch gekennzeichnet, daß die beiden Bauteile mit insbesondere bajonettverschlußartigen Drehkupplungsmitteln (16) versehen sind.

4. Zugentlastungsvorrichtung nach einem der Ansprüche 1 bis 3, dadurch gekennzeichnet, daß das eine Bauteil (11) als fest mit dem für den Leiteranschluß bestimmten Gerät verbindbares oder verbundenes Sockelteil und das andere Bauteil (12) als vom Leiter (13) zu durchdringendes Drehriegelteil ausgebildet ist.

5. Zugentlastungsvorrichtung nach Anspruch 1 bis 4, dadurch gekennzeichnet, daß eines der Bauteile (11) mit einem Steckzapfenabschnitt (25) in einen diesen umschließenden Kragenabschnitt (30) des anderen Bauteils (12) eingreift und der Steckzapfenabschnitt (25) mit zunehmendem Verdrehwinkel eine im wesentlichen radiale Verengung erfährt.

6. Zugentlastungsvorrichtung nach Anspruch 5, dadurch gekennzeichnet, daß der Steckzapfenabschnitt (25) zur Bildung spannzangenartiger Klemmbacken (20, 21) mit wenigstens einem Axialeinschnitt (19) versehen ist.

7. Zugentlastungsvorrichtung nach Anspruch 5 oder 6, dadurch gekennzeichnet, daß mittels zweier einander gegenüberliegend angeordneter Axialeinschnitte (19) der Steckzapfenabschnitt (25) in zwei Klemmbacken (20, 21) unterteilt ist, von denen jede einen Bajonettverschlußzapfen (17) aufweist, dessen Umfang (17a) entgegen seiner Drehrichtung eine radiale Steigung aufweist.

8. Zugentlastungsvorrichtung nach einem der vorhergehenden Ansprüche, dadurch gekennzeichnet, daß mindestens einer der beiden Leiterdurchführungsöffnungen (14, 15) ein axialer Teilbereich (22) zugeordnet ist, der im Querschnitt geringfügig erweitert ist und an seiner Innenwandung Klemmriefen (23) aufweist.

FIG. 1

# FIG. 2

# FIG. 3

FIG. 4

FIG. 5